# EUROPEAN PATENT SPECIFICATION

(11) **EP 3 719 460 B1**
(45) Date of publication and mention of the grant of the patent: **17.05.2023**
(21) Application number: 19166521.5
(22) Date of filing: 01.04.2019
(51) Int. Cl.: G01J 3/28, G01J 1/44, G01J 3/10, G01S 17/00

(54) **OPTICAL SPECTROMETER, PARTICULARLY A CLOSED-LOOP OPTICAL SPECTROMETER**
OPTISCHES SPEKTROMETER, INSBESONDERE EIN OPTISCHES SPEKTROMETER MIT GESCHLOSSENEM REGELKREIS
SPECTROMÈTRE OPTIQUE, EN PARTICULIER UN SPECTROMÈTRE OPTIQUE EN BOUCLE FERMÉE

(43) Date of publication of application: 07.10.2020
(73) Proprietor: Integrated Device Technology, Inc., San Jose, CA 95138 (US)
(72) Inventor: Allen, Dan Gilbert, Springville, 84663 (US)
(74) Representative: Lippert Stachow Patentanwälte Rechtsanwälte Partnerschaft mbB

(56) References cited:
- EP-A1- 3 406 194
- WO-A1-2010/088761
- US-A1- 2003 223 053

## Description

The invention relates to an optical spectrometer, particularly to a closed-loop optical spectrometer.

An optical spectrometer is an instrument used to measure properties of light over a specific range of the electromagnetic spectrum. The optical spectrometer for example measures the intensity of light over a range of wavelength or wavenumbers. This measurement can be open-loop, i.e. measuring an external light source or ambient light, or closed-loop, i.e. measuring the reflection, transmission or scattering of a controlled light source from a target.

Closed-loop optical spectrometers are particularly prone to 1/f noise, which is characterized by a rising noise amplitude at low frequencies. This affects the calibration of closed-loop optical spectrometers, which must then be recalibrated regularly to guarantee a specific accuracy.

From the prior art optical feedback schemes and specialty electronic components are known to limit 1/f noise and enhance the intervals between recalibrations. However, these have a negative impact on the costs and the size of an optical spectrometer.

European patent application EP 3 406 194 A1 discloses a circuit arrangement for an optical monitoring system comprising a driver circuit, which is configured to generate at least one driving signal for driving a light source. A detector terminal is arranged for receiving a detector current from an optical detector. A gain stage is connected at its input side to the driver circuit for receiving the driving signal and generates a noise signal depending on the driving signal. A processing unit is configured to generate an output signal depending on the detector current and the noise signal.

US patent application US 2003/0223053 A1 discloses structures and methods for three-dimensional image sensing using high frequency modulation that includes CMOS-implementable sensor structures using differential charge transfer, including such sensors enabling rapid horizontal and slower vertical dimension local charge collection. Wavelength response of such sensors can be altered dynamically by varying gate potentials. Methods for producing such sensor structures on conventional CMOS fabrication facilities include use of "rich" instructions to command the fabrication process to optimize image sensor rather than digital or analog ICs. One detector structure has closely spaced-apart, elongated finger-like structures that rapidly collect charge in the spaced-apart direction and then move collected charge less rapidly in the elongated direction. Detector response is substantially independent of the collection rate in the elongated direction.

According to WO 2010/088761 A1 a first integrated circuit operable in association with a microfluidic structure is provided that includes a field generator, a controller configured to control the field generator to generate at least one field to effect movement of at least one analyte of interest in a fluid contained in the microfluidic structure, and an optical detection component configured to optically detect the at least one analyte of interest, as movement of the at least one analyte of interest through the microfluidic structure is effected by the at least one field. A second integrated circuit operable in association with a microfluidic structure is also provided that includes an optical detector configured to generate an output indicative of light from at least one analyte of interest in a fluid within the microfluidic structure; and circuitry configured to convert the output of the optical detector to a digital value.

It is therefore an object of the present invention to limit 1/f noise and enhance recalibration intervals for optical spectrometers without increasing the costs or the size of the optical spectrometer.

According to the invention this object is solved by an optical spectrometer, particularly a closed-loop optical spectrometer, comprising the features of claim 1.Favourable modifications are defined in the dependent claims.

The common controller acts as drivers with a common noise-reference for the at least one light source and/or the at least one external light source and the analog-to-digital converter.

The optical spectrometer of the prior art consists of a light emitting part and a light receiving part. The light emitting part usually comprises at least one light source and a controller for the at least one light source. The light receiving part according to the prior art comprises e.g. a spectroscopic sensor array and an analog-to-digital converter for converting the signals of the spectroscopic sensor array and a controller for the light receiving part. Each of these two parts has its own controller and power supply circuit. It has been found out that each of these two parts is subject to independent 1/f noise. Furthermore, each of the power supply circuits is subject to an independent drift. The overall noise of the optical spectrometer is worse than the separate noise of the light emitting part and the light receiving part. The different drifts in the power supply circuits require a regularly recalibration because long averages are less effective in improving the signal-to-noise ratio for different drifts in the power supply circuits.

According to the invention the optical spectrometer comprises the common controller for the at least one light source and/or the at least one external light source and the analog-to-digital converter that is located on a single semiconductor die or integrated in a single circuit. Preferably also the at least one light source, the analog-to-digital converter and/or spectroscopic sensor array are located on the same semiconductor die or are integrated in the same circuit as the common controller. All components located on the same semiconductor die or integrated in the same circuit share a common power supply circuit, particularly a common voltage reference. A key insight is that if the transmitter and receiver responses scale inversely with voltage reference, variations, i.e. noise, in the common voltage reference may be cancelled to first order. This reduces the 1/f noise and also the drift and thereby improves the overall signal-to-noise ratio of the optical spectrometer. This is achieved with less components because only one common controller with a single power supply circuit is necessary. Thus, the costs and chip size are reduced by the optical spectrometer according to the invention. The common controller preferably comprises a single power supply circuitry and particularly provides a common voltage reference.

According to the invention the at least one light source is current driven or the at least one output for an external light source is a current source and the analog-to-digital converter is current driven and the common controller is a common current controller. In general, the output of a current driven device depends on the input current of the device. An example of a current driven light source is a LED. Examples for current driven analog-to-digital converters are single-slope and multi-slope analog-to-digital converters or sigma-delta (also referred to as delta-sigma) analog-to-digital converters (also referred to as ADCs). Importantly, the current-referenced ADCs become less sensitive with larger reference currents. The sensing range increases and they generate less ADC "counts" per input signal, meaning the ADC has a larger least significant bit. Whereas, an LED output increases with current and thus generates more counts in a closed-loop spectrometer application. In this variant the common current controller, which is supplied by the common voltage reference, is used to create the drive current for the at least one light source and the analog-to-digital converter. Thus, since both drive currents depend on the same common voltage reference and signal output responds inversely to variations, the 1/f noise and drift are reduced.

The common current controller comprises a first current controller and a second current controller for the at least one light source and/or the at least one output for an external light source and the analog-to-digital converter. Advantageously, the first current controller and the second current controller can be used to either control the at least one light source and/or the at least one external light source and the analog-to-digital converter. According to the invention, the first current controller and the second current controller are located on the same semiconductor die or are integrated in the same circuit and therefore share the same common voltage reference to reduce 1/f noise and drift.

Pursuant to the invention the first current controller comprises a first feedback controller, a first sensing resistor and a first current drive stage and the second current controller comprises a second feedback controller, a second sensing resistor and a second current drive stage. The first current drive stage and second current drive stage provide the current for the first and second loads, respectively, i.e. the at least one light source and/or the at least one external light source and the analog-to-digital converter. The current sourced by the respective current drive stages for the respective first load and second loads are proportional to the inputs of the first and second feedback controller. The first and second feedback controllers may be very similar, although the driver stages may produce quite different current levels. For instance, the first current driver may produce fractions of milliamps, microamps, or even nanoamps for the analog-to-digital converter, whereas the second current driver may produce tens of milliamps to amps for the LED. Beneficially, the first current controller and the second current controller share a common voltage reference.

The first sensing and second sensing resistors respectively provide feedback to the respective first and second feedback controllers. In other words, the first load current is controlled by the first current drive stage via a feedback from the voltage generated by the first load current passing through the first sensing resistor. Accordingly, the second load current is controlled by the second current drive stage via a feedback from the voltage generated by the second load current passing through the second sensing resistor. The first current drive stage and first sensing resistor are e.g. connected to the first feedback controller and the second current drive stage and second sensing resistor are e.g. connected to the second feedback controller.

The term resistor or resistance according to the present invention includes transistor-based active loads resistances commonly used in integrated circuits.

In this arrangement, the 1/f noise of the voltage reference is cancelled, but independent noise within the feedback controllers could still cause the at least one (external) light source and analog-to-digital converter currents to be uncorrelated.

To solve that, the feedback controllers may be rapidly swapped between the two current drive stages, so that the respective noise in the control stages is cancelled in a time-averaged sense. Accordingly, the optical spectrometer comprises a multiplexer for multiplexing between a first operating condition, in which the first feedback controller is connected to the first sensing resistor and the first current driver stage and in which the second feedback controller is connected to the second sensing resistor and the second current drive stage, and a second operating condition, in which the first feedback controller is connected to the second sensing resistor and the second current drive stage and in which the second feedback controller is connected to the first sensing resistor and the first current drive stage. Thus, the multiplexer swaps the first and second sensing resistors and first and second current drive stages between the first and second feedback controllers. By swapping the sensing resistors and current drive stages between the feedback controllers and building averages over multiple of these swaps, the 1/f noise in the control stages can be cancelled up to one half of the swapping frequency. This is also referred to as frame rate-halfing technique, wherein each frame corresponds to a swap of the sensing resistors and current drive stages. Preferably the obtained samples are accumulated over an even number of frames.

The multiplexer implements a chopping scheme in which the first current controller alternately controls the current of the first load and the current of the second load. Simultaneously the second current controller alternately controls the current of the second load and the current of the first load. In particular, the first feedback controller is connected to a first current drive stage driving a first load, e.g. the at least one light source, and the first sensing resistor; the second feedback controller is connected to a second current drive stage driving a second load, e.g. the analog-to-digital converter, and the second sensing resistor. The first and second feedback controllers seek to adjust the current provided by the first and second current driver stage such that the current through the first and second sensing resistor, which are in series connection with the first and second load respectively, produce a voltage equal to a reference voltage. Other similar schemes for closed-loop control of the current can also be used according to the invention. Noise at the input of the first and second current controller translates to noise in the first and second current drive stages respectively. By swapping rapidly, the current delivered to each load equates to the average of the drift in the respective control stages. This chopping scheme provides a time-averaged cancellation of noise and drift for frequencies much lower than the chopping frequency.

In a typical application the sensor array may acquire many "frames" or snapshots in rapid succession as a means to reduce drift or cancel measurement noise in the sensor array during a measurement. The frames are then summed to obtain a final higher resolution, lower noise measurement.

According to a preferred embodiment alternate frames may be captured between switching the feedback controllers between the current drive stages. This avoids glitches from switching during an exposure, particularly when a global shutter scheme is used.

According to a variant of the invention the optical spectrometer comprises a current mirror for driving multiple light sources. For example, the optical spectrometer comprises multiple current drive stages, one for each light source. In this example the multiple current drive stages are current mirrors. Using such a current mirror it is easy to control multiple light source of an optical spectrometer by connecting or disconnecting the current mirror input voltage to a controller. This is appropriate when a rolling shutter scheme is used to readout the sensor array.

In an alternative variant of the invention the common current controller is connected to or comprises a current mirror for driving each load, particularly for driving the analog-to-digital converter and the at least one light source. Advantageously, the common current controller comprises a common feedback controller, a common sensing resistor and/or a separate current drive stage for each load, particularly for each (external) light source and/or the analog-to-digital converter. Thus, only one sensing resistor is necessary and a current mirror for driving each load.

According to a variant of the invention multiple current mirrors can be connected to each load, preferably by switches, for adjusting the load current. In this way the load current can be regulated by connecting one or more current mirrors in parallel to a load, preferably by setting corresponding switches. This is useful for adjusting the current level in the at least one light source or the analog-to-digital converter to an appropriate level for the sensitivity or range required by an application.

In a further variant of the invention the optical spectrometer comprises a switching array, for connecting the spectroscopic sensor array to the analog-to-digital converter, particularly for converting separate or groups of signals of the spectroscopic sensor array by the analog-to-digital converter. Thus, the switching array determines how the signals of the spectroscopic sensor array are processed by the analog-to-digital converter. For example, groups of sensors of the spectroscopic sensor array can be processed in parallel.

According to an advantageous variant the sensing resistor is adjustable, particularly by connecting different resistors in series and/or in parallel, for example by respective switches, or by adjusting the bias point of an active load. Thus, the sensing resistor can be for example adjusted to the current load of the first current controller, the second current controller or the common current controller.

Pursuant to a variant of the invention the optical spectrometer comprises multiple (external) light sources. Preferably each of the multiple light sources has a different wavelength and/or intensities. Particularly the multiple (external) light sources are separately switchable.

Preferably the first feedback controller, the second feedback controller and/or the common current feedback controller is an operational amplifier. The first current drive stage, the second current drive stage and/or each separate current drive stage is for example a CMOS transistor.

Preferably the at least one light source is a LED light source or phosphor-converted LED light source. Incandescent sources may achieve less 1/f noise cancellation due to nonlinearity of light output with current.

In the following the invention will be further explained with respect to the embodiments shown in the figures. It shows:
- Fig. 1: a schematic block diagram of a first embodiment of an optical spectrometer,
- Fig. 2a: a block diagram on system level of an optical spectrometer according to a second embodiment in a first operating state,

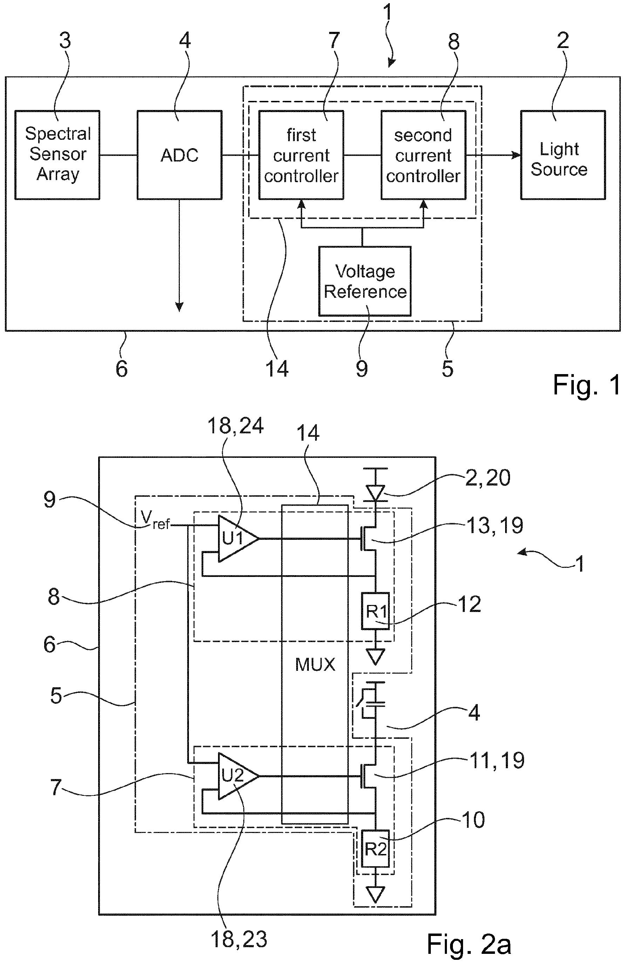

- Fig. 2a: a block diagram on system level of the optical spectrometer of the second embodiment in a second operating state,

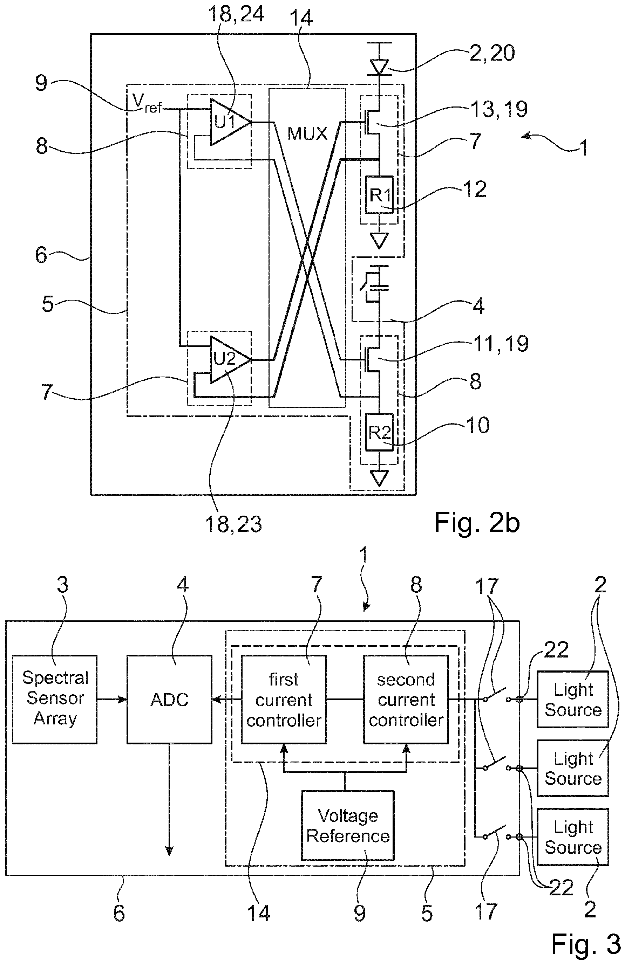

- Fig. 3: a schematic block diagram of a third embodiment of an optical spectrometer,

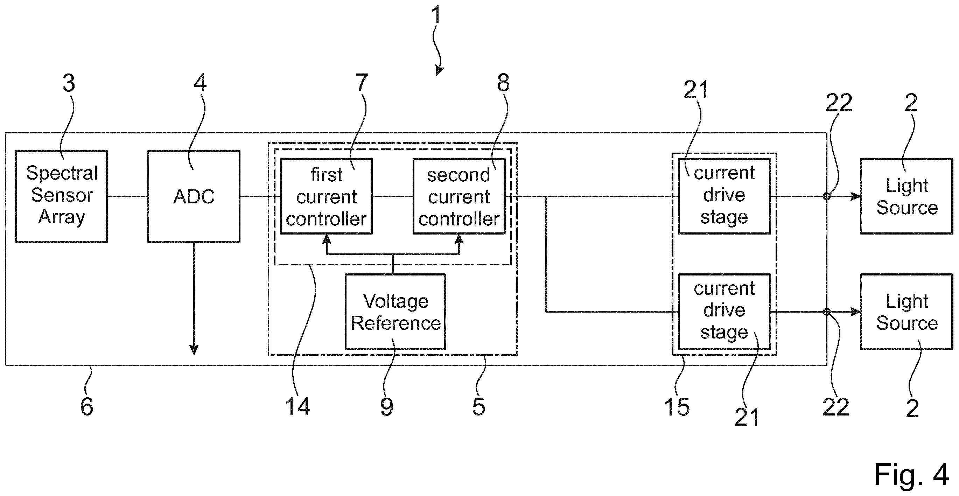

- Fig. 4: a schematic block diagram of a fourth embodiment of an optical spectrometer,

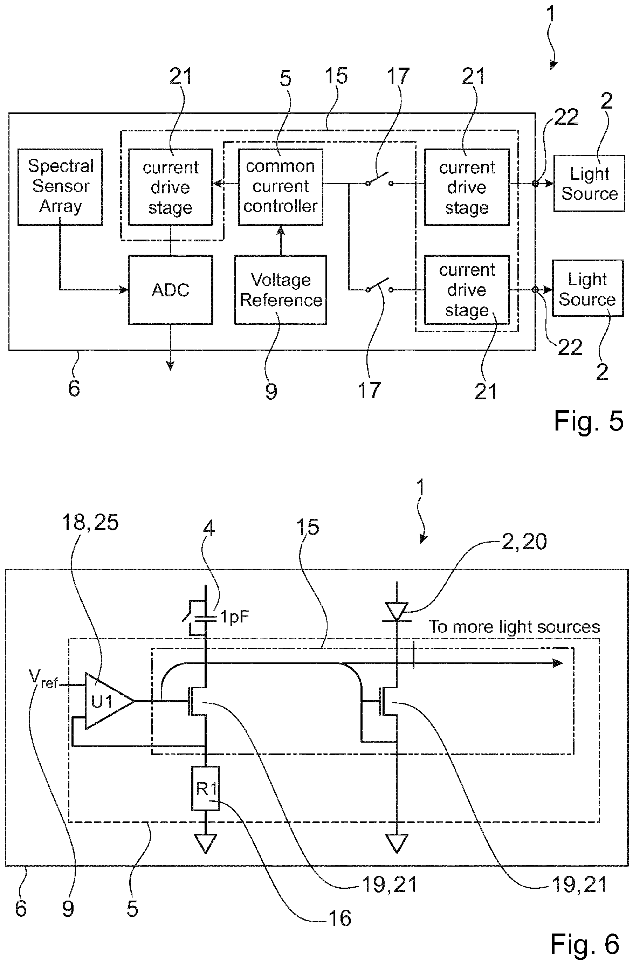

- Fig. 5: a schematic block diagram of a fifth embodiment of an optical spectrometer,
- Fig. 6: a block diagram on system level of a sixth embodiment of an optical spectrometer, and

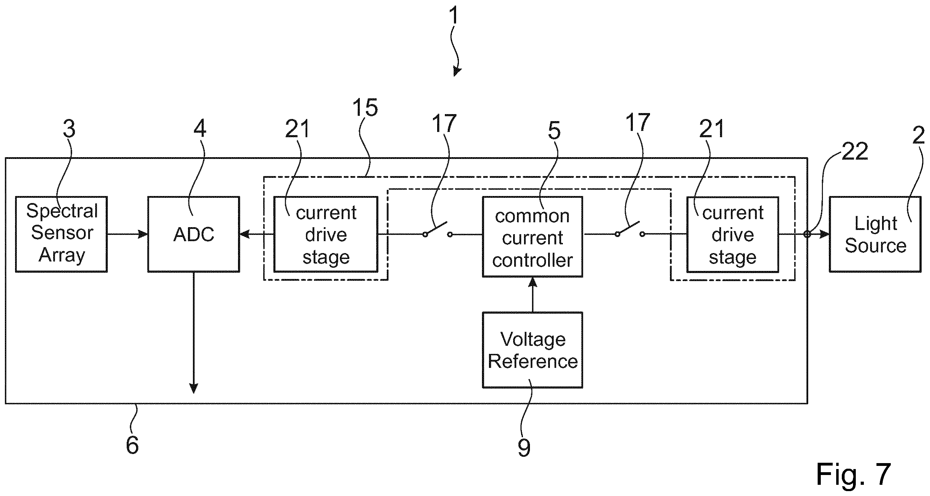

- Fig. 7: a schematic block diagram of a seventh embodiment of an optical spectrometer.

Fig. 1 shows a schematic block diagram of a first embodiment of an optical spectrometer 1, particularly a closed-looped spectrometer 1. The optical spectrometer 1 of Fig. 1 comprises a light source 2, a spectroscopic sensor array 3 and an analog-to-digital converter 4 for converting the signals of the spectroscopic sensor array 3.

According to the present invention the optical spectrometer comprises a common controller 5 for the at least one light source 2 and the analog-to-digital converter 4 that is located on a single semiconductor die 6 or integrated in a single circuit 6. In the embodiment shown in Fig. 1 all components of the optical spectrometer 1 are located on the same semiconductor die 6 or are integrated in the same circuit.

In general, at least the common controller 5 is located on the same semiconductor die or integrated in the same circuit 6, and preferably also the analog-to-digital converter 4, the spectroscopic sensor array 2 and/or the at least one light source 2 is located on the same semiconductor die or integrated in the same circuit 6.

According to the first embodiment of Fig. 1 the light source 2 and the analog-to-digital converter 4 are current driven and the common controller is a common current controller 5.

The common current controller 5 comprises a first current controller 7 and a second current controller 8 for the light source 2 and the analog-to-digital converter 4. The first current controller 7 and the second current controller 8 share the same common voltage reference.

Fig. 1 shows the optical spectrometer 1 in a first operating condition, in which the first current controller 7 is connected to the analog-to-digital converter 4 and the second current controller 8 is connected to the light source 2. In a second operating condition, the first current controller 7 is connected to the light source 2 and the second current controller 8 is connected to the analog-to-digital converter 4.

The optical spectrometer 1 comprises a multiplexer 14 for multiplexing between the first operating condition and the second operating condition. In general, i.e. independent of the embodiment shown in Fig. 1, the multiplexer 14 swaps the first current controller 7 and the second current controller 8 between the loads, particularly between the analog-to-digital converter 4 and the at least one light source 2.

The optical spectrometer emits light to the surroundings by light source 2. Some of the emitted light is reflected and/or scattered by one or more objects in the surroundings of the optical spectrometer 1. This light is received by the spectroscopic sensor array 3, which creates a corresponding analog signal. This analog signal is converted by the analog-to-digital converter 4 and forwarded to a digital signal processor (not shown) for further processing.

From the prior art it is known that the light emitting part and the light receiving part of the optical spectrometer 1 are built on separate semiconductor dies or integrated circuits. Although both parts might be connected to the same voltage supply, each part has its own power circuitry. It has been found out, that each power circuitry is subject to independent 1/f noise and drift. This results in an increased overall error and requires a regular recalibration due to the different drifts.

According to the invention the at least one light source 2 and the analog-to-digital converter 4 are controlled by the common controller 5 and thus share the same common voltage reference. According to the invention there is only one power circuitry, thereby reducing the 1/f noise by up to 50 % and avoiding different drifts.

The multiplexer 14 is used to switch the first current controller 7 and the second current controller 8 between the at least one light source 2 and the analog-to-digital converter 4. In this way an error associated with the first current controller 7 or the second current controller 8 can be reduced by building the average over at least one swapping cycle.

According to the embodiment shown in Fig. 1 the at least one light source 2 is part of the optical spectrometer 1, especially located on the same semiconductor die 6 or integrated in the same circuit 6 as the other components of the optical spectrometer 1. However, according to the invention the at least one light source 2 can be an external light source 2 and be connected to an output 22 for an external light source 2 of the optical spectrometer 1, as will be explained later with other embodiments of the invention.

Fig. 2a shows a block diagram on system level of an optical spectrometer 1 according to a second embodiment in a first operating condition.

The optical spectrometer 1 comprises a LED 20 as light source 2, a spectroscopic sensor array 3 (not shown) and an analog-to-digital converter 4, represented by the parallel connection of a switch and a capacitor, for converting the signals of the spectroscopic sensor array 3. Thus, the analog-to-digital converter 4 receives an analog signal of the not shown spectroscopic sensor array 3. The analog-to-digital converter 4 converts the analog signal of the spectroscopic sensor array 3 to the digital domain and forwards the digital signal to a digital signal processor (not shown) for further processing.

The optical spectrometer 1 comprises a common controller 5 for the light source 2 and the analog-to-digital converter 4 that is located on a single semiconductor die 6 or integrated in a single circuit 6. Since the light source 2 and the analog-to-digital converter 4 are current driven, the common controller 5 is a common current controller 5.

The common current controller 5 comprises a first current controller 7 and a second current controller 8 for the light source 2 and the analog-to-digital converter 4. The first current controller 7 and the second current controller 8 share the same voltage reference 9.

In a first operating condition, the first current controller 7 comprises a first feedback controller 23, a first sensing resistor 10 and a first current drive stage 12 and the second current controller 8 comprises a second feedback controller 24, a second sensing resistor 12 and a second current drive stage 13.

In the first operating condition the light source 2 is controlled by the second feedback controller 24. The light source 2 is connected in series with a second current drive stage 13 and a second sensing resistor 12. The second current drive stage is a CMOS transistor 19. The second feedback controller 24 is an operational amplifier 18, which is connected to the second current drive stage 13 and as a feedback to the second sensing resistor 12.

The analog-to-digital converter 4 is controlled in the first operating condition by the first feedback controller 23. The analog-to-digital converter 4 is connected in series with a first current drive stage 11 and a first sensing resistor 10. The first current drive stage 11 is also a CMOS transistor 19. The first feedback controller 23 is an operational amplifier 18, which is connected to the first current drive stage 11 and as a feedback to the first sensing resistor 10.

Between the first and second feedback controller 23, 24 and the first and second current drive stages 11, 13 and first and second sensing resistor 10, 12 a multiplexer 14 is arranged. The multiplexer 14 multiplexes between the first operating condition shown in Fig. 2a, in which the first feedback controller 23 is connected to the analog-to-digital converter 4, particularly to the first sensing resistor 10 and the first current drive stage 11 and in which the second current controller 24 is connected to the light source 2, particularly to the second sensing resistor 12 and the second current drive stage 13, and a second operating condition as shown in Fig. 2b, in which the first feedback controller 23 is connected to the light source 2, particularly to the second sensing resistor 12 and the second current drive stage 13 and in which the second feedback controller 24 is connected to the analog-to-digital converter 4, particularly to the first sensing resistor 10 and the first current drive stage 11.

Thus, in the second operating condition the first current controller 7 comprises the first feedback controller 23, the second feedback resistor 12 and the second current drive stage 13 and the second current controller 8 comprises the second feedback controller 24, the first feedback resistor 10 and the first current drive stage 11. Thus, the multiplexer 14 swaps the first feedback controller 23 and the second feedback controller 24 only and not the complete first and second current controller 7, 8 because the main source of noise and drift is associated with the first and second feedback controller 23, 24 and not the first and second feedback resistor 10, 12 or the first and second current drive stage 11, 13.

All components of the optical spectrometer 1 are located on the same semiconductor die 6 or are integrated in the same circuit 6 and the first current controller 7 and the second current controller 8 are connected to the same common reference voltage 9.

Fig. 2b shows a block diagram on system level of the optical spectrometer 1 according to the second embodiment in the second operating condition, i.e. after the multiplexer 14 has multiplexed the first feedback controller 23 and the second current controller 24 between the light source 2 and the analog-to-digital converter 4.

Fig. 3 shows a block diagram of a third embodiment of an optical spectrometer, particularly of a closed-loop optical spectrometer 1. The third embodiment of Fig. 3 differs from the first embodiment of Fig. 1 in that the optical spectrometer 1 comprises multiple light sources 2, represented in Fig. 3 by three light sources 2. Furthermore, the light sources 2 are not located on the same semiconductor die 6 or integrated in the same circuit 6 as the other components of the optical spectrometer 1. The external light sources 2 are for example connected to the remaining components of the optical spectrometer 1 via outputs 22 of the optical spectrometer 1. This does not negatively affect the overall system performance because the connection between the other components of the optical spectrometer 1 and the multiple external light sources 2 is not a major source of 1/f noise and drift.

Each external light source 2 is connected in the first operating condition to the second current controller 8 respectively in the second operating condition to the first current controller 7 by a respective switch 17. Switches 17 guarantee for example, that only one light source 2 is connected to the first or second current controller 7, 8 at a time.

Using the multiple external light sources 2 the optical spectrometer 1 according to the second embodiment of Fig. 3 can for example emit light with different wavelength and/or intensities.

Fig. 4 shows a schematic block diagram of a fourth embodiment of an optical spectrometer 1, particularly a closed-loop optical spectrometer 1. The optical spectrometer 1 of Fig. 4 comprises two current driven external light sources 2, a spectroscopic sensor array 3 and a current driven analog-to-digital converter 4 for converting the signals of the spectroscopic sensor array 3. The external light sources 2 are connected to outputs 22 of the optical spectrometer 1. For current driven light sources the outputs are current sources.

The optical spectrometer 1 further comprises a common current controller 5 for the two light sources 2 and the analog-to-digital converter 4. The common current controller 5 is located on a single semiconductor die 6 or integrated in a single circuit 6 and thus comprises a common voltage reference 9.

The common current controller 5 comprises a first current controller 7 and a second current controller 8 for the analog-to-digital converter 4 and the two light sources 2, wherein the first current controller 7 and the second current controller 8 share the common voltage reference 9.

The common current controller 5 further comprises a multiplexer 14 for multiplexing between a first operating condition and a second operating condition. In the first operating condition as shown in Fig. 4 the first current controller 7 is connected to the analog-to-digital converter 4 and the second current controller 8 is connected to the two light sources 2, whereas in the second operating condition (not shown) the first current controller 7 is connected to the two light sources 2 and the second current controller is connected to the analog-to-digital converter 4. Thus, the multiplexer 14 swaps the first current controller 7 and second current controller 8 between the analog-to-digital converter 4 and the two light sources 2. In case the first current controller 7 and the second current controller 8 comprise respective first and second feedback controller 23, 24 the multiplexer might only swap these first and second feedback controller 23, 24 between the first and second operating condition, as explained above with respect to the second embodiment shown in Figs. 2a and 2b.

The optical spectrometer 1 of Fig. 4 further comprises a current mirror 15 for driving multiple light sources 2, in this case the two light sources 2. The current mirror 15 comprises a separate current drive stage 21, for example CMOS transistor 19, for each light source 2.

The two external light sources 2 are for example LEDs or LED-pumped phosphors, preferably with different wavelength and/or intensities.

All parts of the optical spectrometer 1 except the two external light sources 2 are located on the same semiconductor 6 or are integrated in the same circuit 6 and thus share the common voltage reference 9. The two external light sources 2 are connected to the semiconductor die 6 or integrated circuit 6 for example via outputs 22 of the optical spectrometer 1.

The fourth embodiment of Fig. 4 differs from the third embodiment of Fig. 3 mainly in that the external light sources are operated via the current mirror 15 and are not switchable. The current mirror 15 allows are parallel driving of multiple loads, e.g. in this case the two external light sources 2. In contrast to this, according to the third embodiment of Fig. 3 only one light source 2 is activated via switch 17 at a time.

In Fig. 5 a fifth embodiment of an optical spectrometer 1, particularly a closed-loop optical spectrometer 1 is shown. The optical spectrometer 1 comprises two external light sources 2, a spectroscopic sensor array 3 and an analog-to-digital converter 4 for converting the signals of the spectroscopic sensor array 3.

The optical spectrometer 1 comprises a common controller 5 for the two external light sources 2 and the analog-to-digital converter 4, wherein the common controller 5 is located on a single semiconductor die 6 or integrated in a single circuit 6.

The two external light sources 2 and the analog-to-digital converter 4 are current driven and the common controller 5 is a common current controller 5.

The common current controller 5 is connected to a current mirror 15 for driving each load, particularly for driving the analog-to-digital converter 5 and the two external light sources 2. Thus, the two external light sources 2 and the analog-to-digital converter 5 are driven by the common current controller 5 and no differences in 1/f noise and/or drift occur. Furthermore, the number of components and hence the required space is reduced.

The current mirror 15 comprises a separate current driving stage 21 for each load, i.e. the two external light sources 2 and the analog-to-digital converter 4.

All components of the optical spectrometer 1 except the two external light sources are located on the same semiconductor die or are integrated in the same circuit 6 and share the same common voltage reference 9. The two external light sources 2 are connected to outputs 22 of the optical spectrometer 1.

The two current drive stages 21 of the current mirror 15 connected to the two external light source 2 are connected to the common current controller 5 via respective switches 17, so that the two external light sources 2 are switchable.

The two external light sources 2 are LEDs, preferably with different wavelength and/or intensities.

Fig. 6 shows a block diagram on system level of a sixth embodiment of a closed-loop optical spectrometer 1. The closed-loop optical spectrometer 1 comprises at least one light source 2, a spectroscopic sensor array 3 (not shown in Fig. 6) and an analog-to-digital converter 4, represented in Fig. 6 by the parallel connection of a switch and a capacitor, for converting the signals of the spectroscopic sensor array 3. The optical spectrometer 1 further comprises a common current controller 5 for the at least one current driven light source 2 and the current driven analog-to-digital converter 4, wherein the common current controller 5 is located on a single semiconductor die 6 or integrated in a single circuit 6.

According to the embodiment of Fig. 6 all components of the optical spectrometer 1 are located on the same semiconductor die 6 or integrated in the same circuit 6.

The common current controller 5 is connected to or comprises a current mirror 15 for driving each load, particularly for driving the analog-to-digital converter 4 and the at least one light source 2. The current mirror 15 comprises a separate current drive stage 21 for each load.

As shown in fig. 6 the common current controller 5 comprises a common feedback controller 25, a common sensing resistor 16 as feedback and the separate current drive stages 21 for each load of the current mirror 15.

For example, the analog-to-digital converter 4 is connected in series with a separate current drive stage 21 and the common sensing resistor 16 and the at least one light source 2 is connected in series with another separate current drive stage 21 and in parallel to the series connection of the analog-to-digital converter 4, the first separate current drive stage 21 and the common sensing resistor 16.

The common feedback controller 25 is an operational amplifier 18, the separate current driving stages 21 are CMOS transistors 19 and the light source 2 is a LED.

As indicated Fig. 6 the optical spectrometer 1 can comprise more light sources 2.

A seventh embodiment of a closed-loop optical spectrometer 1 is shown in the schematic block diagram of Fig. 7. The optical spectrometer 1 comprises an external light source 2, a spectroscopic sensor array 3 and an analog-to-digital converter 4 for converting the signals of the spectroscopic sensor array 3. The external light source 2 and the analog-to-digital converter 4 are current driven.

The optical spectrometer 1 further comprises a common current controller 5 for the current driven light source 2 and the current driven analog-to-digital converter 4. All components of the optical spectrometer 1 except the external light source are located on the same semiconductor die 6 or are integrated in the same circuit 6 and thus share the same common voltage reference 9. The external light source 2 is connected to output 22 of the optical spectrometer 1.

The common current controller 5 is connected to or comprises a current mirror 15 for driving the analog-to-digital converter 4 and the light source 2. The current mirror 15 comprises a separate current drive stage 21 for the analog-to-digital converter 4 and the light source 2, which are connected to the common current controller 5 via respective switches 17.

### List of reference numerals

- 1: optical spectrometer
- 2: light source
- 3: spectroscopic sensor array
- 4: analog-to-digital converter
- 5: common (current) controller
- 6: semiconductor die/ integrated circuit
- 7: first current controller
- 8: second current controller
- 9: common voltage reference
- 10: first sensing resistor
- 11: first current drive stage
- 12: second sensing resistor
- 13: second current drive stage
- 14: multiplexer
- 15: current mirror
- 16: common sensing resistor
- 17: switch
- 18: operational amplifier
- 19: CMOS transistor
- 20: LED
- 21: separate current drive stage
- 22: output for light source
- 23: first feedback controller
- 24: second feedback controller
- 25: common feedback controller

## Claims

1. Optical spectrometer (1), particularly a closed-loop optical spectrometer (1), comprising:
at least one light source (2) and/or at least one output (22) for an external light source (2), wherein the at least one light source (2) is current driven or the at least one output (22) for an external light source (2)is a current source,
a spectroscopic sensor array (3), and
an analog-to-digital converter (4) for converting the signals of the spectroscopic sensor array (3), wherein the analog-to-digital converter (4) is current driven, and
a common controller (5) for the at least one light source (2) and/or the at least one external light source (2) and the analog-to-digital converter (4) that is located on a single semiconductor die (6) or integrated in a single circuit (6), wherein the common controller (5) is a common current controller (5) comprising a first current controller (7) and a second current controller (8) for the at least one light source (2) and/or the at least one output (22) for an external light source (2) and the analog-to-digital converter (4), wherein the first current controller (7) and the second current controller (8) share the same common voltage reference (9), wherein the first current controller (7) comprises a first feedback controller (18), a first sensing resistor (10) and a first current drive stage (12) and the second current controller (8) comprises a second feedback controller, a second sensing resistor (12) and a second current drive stage (13)
**characterized in that**
the common current controller (5) further comprises a multiplexer (14) for multiplexing between a first operating condition, in which the first feedback controller is connected to the first sensing resistor (10) and the first current drive stage (11) and in which the second feedback controller (8) is connected to the second sensing resistor (12) and the second current drive (13) stage, and a second operating condition, in which the first feedback controller (7) is connected to the second sensing resistor (12) and the second current drive stage (13) and in which the second feedback controller (8) is connected to the first sensing resistor (10) and the first current drive stage (11).

2. Optical spectrometer (1) according to claim 1,
wherein the optical spectrometer (1) further comprises one or more current mirrors (15) for driving multiple light sources (2).

3. Optical spectrometer (1) according to claim 1,
wherein the common current controller (5) is connected to or comprises a current mirror (15) for driving each load, particularly for driving the analog-to-digital converter (4) and the at least one light source (2).

4. Optical spectrometer (1) according to claim 2 or 3,
wherein the common current controller (5) comprises a common feedback controller, a common sensing resistor (16) and a separate current drive stage (21) for each load, particularly for each light source (2) and/or the analog-to-digital converter (4).

5. Optical spectrometer (1) according to claim 2 or claim 4, wherein multiple current mirrors (15) can be connected in parallel with a load, preferably by switches (17), for adjusting the load current.

6. Optical spectrometer (1) according to any of claims 1 to 5,
further comprising a switching array, for connecting the spectroscopic sensor array (3) to the analog-to-digital converter (4), particularly for converting separate or groups of signals of the spectroscopic sensor array (3) by the analog-to-digital converter (4).

7. Optical spectrometer (1) according to any of claims 1 to 6,
wherein the sensing resistor (10, 12, 16) is adjustable, particularly by connecting different resistors in series and/or in parallel, for example by respective switches (17), or by adjusting the bias point of an active load.

8. Optical spectrometer (1) according to any of claims 1 to 7,
comprising multiple light sources (2), preferably with different wavelength and/or intensities.

9. Optical spectrometer (1) according to claim 8,
wherein the multiple light sources (2) are separately switchable.

10. Optical spectrometer (1) according to any of claims 1 to 9,
wherein the first current controller (7), the second current controller (8) and/or the common current controller (5) comprises an operational amplifier (18).

11. Optical spectrometer (1) according to any of claims 1 or 2 and 4 to 10,
wherein the first current drive stage (11), the second current drive stage (13) and/or each separate current drive stage (21) is a CMOS transistor (19).

## Patentansprüche

1. Optisches Spektrometer (1), insbesondere ein optisches Spektrometer (1) mit geschlossenem Regelkreis, umfassend:
mindestens eine Lichtquelle (2) und/oder mindestens einen Ausgang (22) für eine externe Lichtquelle (2), wobei die mindestens eine Lichtquelle (2) strombetrieben ist oder der mindestens eine Ausgang (22) für eine externe Lichtquelle (2) eine Stromquelle ist,
ein spektroskopisches Sensorarray (3) und
einen Analog-Digital-Wandler (4) zum Umwandeln der Signale des spektroskopischen Sensorarrays (3), wobei der Analog-Digital-Wandler (4) stromgesteuert ist, und
eine gemeinsame Steuerung (5) für die mindestens eine Lichtquelle (2) und/oder die mindestens eine externe Lichtquelle (2) und den Analog-Digital-Wandler (4), der sich auf einem einzelnen Halbleiter-Die (6) befindet oder in einer einzelnen Schaltung (6) integriert ist, wobei die gemeinsame Steuerung (5) eine gemeinsame Stromsteuerung (5) ist, der eine erste Stromsteuerung (7) und eine zweite Stromsteuerung (8) für die mindestens eine Lichtquelle (2) und/oder den mindestens einen Ausgang (22) für eine externe Lichtquelle (2) und den Analog-Digital-Wandler (4) umfasst, wobei die erste Stromsteuerung (7) und die zweite Stromsteuerung (8) sich die gleiche gemeinsame Spannungsreferenz (9) teilen,
wobei die erste Stromsteuerung (7) eine erste Rückkopplungssteuerung (18), einen ersten Messwiderstand (10) und eine erste Stromtreiberstufe (12) umfasst und die zweite Stromsteuerung (8) eine zweite Rückkopplungssteuerung, einen zweiten Messwiderstand (12) und eine zweite Stromtreiberstufe (13) umfasst **dadurch gekennzeichnet, dass**
die gemeinsame Stromsteuerung (5) ferner einen Multiplexer (14) zum Multiplexen zwischen einem ersten Betriebszustand, in dem die erste Rückkopplungssteuerung mit dem ersten Messwiderstand (10) und der ersten Stromtreiberstufe (11) verbunden ist und in dem die zweite Rückkopplungssteuerung (8) mit dem zweiten Messwiderstand (12) und der zweiten Stromtreiberstufe (13) verbunden ist, und einem zweiten Betriebszustand, in dem die erste Rückkopplungssteuerung (7) mit dem zweiten Messwiderstand (12) und der zweiten Stromtreiberstufe (13) verbunden ist und in dem die zweite Rückkopplungssteuerung (8) mit dem ersten Messwiderstand (10) und der ersten Stromtreiberstufe (11) verbunden ist, umfasst.

2. Optisches Spektrometer (1) nach Anspruch 1, wobei das optische Spektrometer (1) ferner einen oder mehrere Stromspiegel (15) zum Ansteuern mehrerer Lichtquellen (2) umfasst.

3. Optisches Spektrometer (1) nach Anspruch 1, wobei die gemeinsame Stromsteuerung (5) mit einem Stromspiegel (15) zum Ansteuern jeder Last, insbesondere zum Ansteuern des Analog-Digital-Wandlers (4) und der mindestens einen Lichtquelle (2), verbunden ist oder diesen umfasst.

4. Optisches Spektrometer (1) nach Anspruch 2 oder 3, wobei die gemeinsame Stromsteuerung (5) eine gemeinsame Rückkopplungssteuerung, einen gemeinsamen Messwiderstand (16) und eine separate Stromtreiberstufe (21) für jede Last, insbesondere für jede Lichtquelle (2) und/oder den Analog-Digital-Wandler (4), umfasst.

5. Optisches Spektrometer (1) nach Anspruch 2 oder Anspruch 4, wobei mehrere Stromspiegel (15) zum Einstellen des Laststroms parallel zu einer Last, vorzugsweise durch Schalter (17), geschaltet werden können.

6. Optisches Spektrometer (1) nach einem der Ansprüche 1 bis 5, ferner umfassend ein Schaltarray zum Verbinden des spektroskopischen Schaltarrays (3) mit dem Analog-Digital-Wandler (4), insbesondere zum Umwandeln von einzelnen oder Gruppen von Signalen des spektroskopischen Sensorarrays (3) durch den Analog-Digital-Wandler (4).

7. Optisches Spektrometer (1) nach einem der Ansprüche 1 bis 6, wobei der Messwiderstand (10, 12, 16) einstellbar ist, insbesondere durch Reihen- und/oder Parallelschaltung verschiedener Widerstände, beispielsweise durch jeweilige Schalter (17), oder durch Einstellen des Vorspannungspunktes einer aktiven Last.

8. Optisches Spektrometer (1) nach einem der Ansprüche 1 bis 7, umfassend mehrere Lichtquellen (2), vorzugsweise mit unterschiedlicher Wellenlänge und/oder Intensität.

9. Optisches Spektrometer (1) nach Anspruch 8, wobei die mehreren Lichtquellen (2) getrennt schaltbar sind.

10. Optisches Spektrometer (1) nach einem der Ansprüche 1 bis 9, wobei die erste Stromsteuerung (7), die zweite Stromsteuerung (8) und/oder die gemeinsame Stromsteuerung (5) einen Operationsverstärker (18) umfasst.

11. Optisches Spektrometer (1) nach einem der Ansprüche 1 oder 2 und 4 bis 10, wobei die erste Stromtreiberstufe (11), die zweite Stromtreiberstufe (13) und/oder jede separate Stromtreiberstufe (21) ein CMOS-Transistor (19) ist.

## Revendications

1. Spectromètre optique (1), en particulier spectromètre optique en boucle fermée (1), comprenant :
au moins une source de lumière (2) et/ou au moins une sortie (22) pour une source de lumière (2) externe, l'au moins une source de lumière (2) étant alimentée en courant ou l'au moins une sortie (22) pour une source de lumière (2) externe étant une source de courant,
un réseau de capteurs spectroscopiques (3), et
un convertisseur analogique-numérique (4) pour convertir les signaux du réseau de capteurs spectroscopiques (3), le convertisseur analogique-numérique (4) étant alimenté en courant, et
un contrôleur commun (5) pour l'au moins une source de lumière (2) et/ou l'au moins une source de lumière (2) externe et le convertisseur analogique-numérique (4), qui est situé sur une seule matrice semi-conductrice (6) ou intégré dans un seul circuit (6), le contrôleur commun (5) étant un contrôleur de courant commun (5) comprenant un premier contrôleur de courant (7) et un second contrôleur de courant (8) pour l'au moins une source de lumière (2) et/ou l'au moins une sortie (22) pour une source de lumière (2) externe et le convertisseur analogique-numérique (4), le premier contrôleur de courant (7) et le second contrôleur de courant (8) partageant la même référence de tension commune (9), le premier contrôleur de courant (7) comprenant un premier contrôleur à rétroaction (18), une première résistance de détection (10) et un premier étage de génération de courant (12) et le second contrôleur de courant (8) comprenant un second contrôleur à rétroaction, une seconde résistance de détection (12) et un second étage de génération de courant (13),
**caractérisé en ce que** :
le contrôleur de courant commun (5) comprend en outre un multiplexeur (14) pour un multiplexage entre un premier état de fonctionnement, dans lequel le premier contrôleur à rétroaction est connecté à la première résistance de détection (10) et au premier étage de génération de courant (11) et dans lequel le second contrôleur à rétroaction (8) est connecté à la seconde résistance de détection (12) et au second étage de génération de courant (13), et un second état de fonctionnement, dans lequel le premier contrôleur à rétroaction (7) est connecté à la seconde résistance de détection (12) et au second étage de génération de courant (13) et dans lequel le second contrôleur à rétroaction (8) est connecté à la première résistance de détection (10) et au premier étage de génération de courant (11).

2. Spectromètre optique (1) selon la revendication 1,
le spectromètre optique (1) comprenant en outre un ou plusieurs miroirs de courant (15) pour alimenter de multiples sources de lumière (2).

3. Spectromètre optique (1) selon la revendication 1,
dans lequel le contrôleur de courant commun (5) est connecté à ou comprend un miroir de courant (15) pour alimenter chaque charge, en particulier pour alimenter le convertisseur analogique-numérique (4) et l'au moins une source de lumière (2).

4. Spectromètre optique (1) selon la revendication 2 ou 3,
dans lequel le contrôleur de courant commun (5) comprend un contrôleur à rétroaction commun, une résistance de détection commune (16) et un étage de génération de courant séparé (21) pour chaque charge, en particulier pour chaque source de lumière (2) et/ou le convertisseur analogique-numérique (4).

5. Spectromètre optique (1) selon la revendication 2 ou la revendication 4,
dans lequel de multiples miroirs de courant (15) peuvent être connectés en parallèle avec une charge, de préférence par des commutateurs (17), pour régler le courant de charge.

6. Spectromètre optique (1) selon l'une quelconque des revendications 1 à 5,
comprenant en outre un réseau de commutation, pour connecter le réseau de capteurs spectroscopiques (3) au convertisseur analogique-numérique (4), en particulier pour convertir des signaux séparés ou des groupes de signaux du réseau de capteurs spectroscopiques (3) par le convertisseur analogique-numérique (4).

7. Spectromètre optique (1) selon l'une quelconque des revendications 1 à 6,
dans lequel la résistance de détection (10, 12, 16) est réglable, en particulier en connectant différentes résistances en série et/ou en parallèle, par exemple à l'aide de commutateurs respectifs (17), ou en réglant le point de polarisation d'une charge active.

8. Spectromètre optique (1) selon l'une quelconque des revendications 1 à 7,
comprenant de multiples sources de lumière (2), de préférence avec des longueurs d'onde et/ou des intensités différentes.

9. Spectromètre optique (1) selon la revendication 8,
dans lequel les multiples sources de lumière (2) sont commutables séparément.

10. Spectromètre optique (1) selon l'une quelconque des revendications 1 à 9,
dans lequel le premier contrôleur de courant (7), le second contrôleur de courant (8) et/ou le contrôleur de courant commun (5) comprennent un amplificateur opérationnel (18).

11. Spectromètre optique (1) selon l'une quelconque des revendications 1 ou 2 et 4 à 10,
dans lequel le premier étage de génération de courant (11), le second étage de génération de courant (13) et/ou chaque étage de génération de courant séparé (21) est un transistor CMOS (19).
